# EUROPEAN PATENT APPLICATION

(11) **EP 4 593 168 A1**
(43) Date of publication of application: **30.07.2025**
(21) Application number: 24865605.0
(22) Date of filing: 24.04.2024
(51) Int. Cl.: H01M 50/116, H01M 50/102, H01M 50/174, H01M 50/342, H01M 50/536

(54) **SECONDARY BATTERY**

(30) Priority: 13.09.2023 KR 20230121562
(71) Applicant: LG Energy Solution, Ltd., Seoul 07335 (KR)
(72) Inventor: NOH, Taeheon, Daejeon 34122 (KR)
(74) Representative: Goddar, Heinz J.
(86) International application number: PCT/KR2024/005506
(87) International publication number: WO 2025/058160

(57) **Abstract**

Disclosed is a secondary battery according to embodiments of the present invention, which includes an electrode structure including a first electrode, a second electrode, and a separator; and a battery case that accommodates the electrode structure therein and is sealed. Here, the battery case may include a first case and a second case which are made of different materials.

## Description

### [Technical Field]

This application claims priority to and the benefit of Korean Patent Application No.10-2023-0121562 filed in the Korean Intellectual Property Office on September 13, 2023 the entire contents of which are incorporated herein by reference.

The present invention relates to a secondary battery, and more particularly, to a secondary battery including a battery case formed by combining cases which are made of different materials.

### [Background Art]

Secondary batteries, capable of recharging and reuse after discharging, serve as power sources for diverse applications, such as small, high-tech electronic devices like smart phones, tablet PCs, and vacuum cleaners, as well as medium to large devices including vehicles and energy storage systems (ESS) for smart grids.

Cells, which are the basic units of secondary batteries, may be classified into cylindrical cells with an electrode structure built into a cylindrical metal can, prismatic cells with an electrode structure built into a prismatic metal can, and pouch-shaped cells with an electrode structure built into a flexible pouch case.

In general, prismatic cells have the advantage of being strong against external shock due to their high structural stability, while pouch-type cells have the advantage of being relatively light and capable of being manufactured in various sizes and shapes. Conversely, prismatic cells are relatively heavy whereas pouch-shaped cells have the disadvantage of low structural stability.

### [Detailed Description of the Invention]

### [Technical Problem]

To obviate one or more problems of the related art, embodiments of the present disclosure provide a secondary battery with advantages of both prismatic cells and pouch-type cells.

To obviate one or more problems of the related art, embodiments of the present disclosure also provide a lightweight secondary battery with improved structural stability.

### [Technical Solution]

In order to achieve the objective of the present disclosure, a secondary battery according to embodiments of the present invention may include an electrode structure including a first electrode, a second electrode, and a separator; and a battery case that accommodates the electrode structure therein and is sealed. Here, the battery case may include a first case and a second case which are made of different materials.

The first case may be made of an inflexible material and the second case may be made of a flexible material.

The first case may be formed to surround a first electrode portion extending from one end of the electrode structure and a second electrode portion extending from the other end of the electrode structure.

At least some areas in the first case may be open. Here, the second case may cover an open area of the first case be and is bonded to be sealed to the first case.

The second case may thermally be bonded and sealed to the first case by heat and pressure applied to an overlapping area with the first case.

The first case may have a rectangular parallelepiped shape and having an open area formed on one or more of the top surface, the front surface, and the back surface. Here, the open area may be formed such that the width of the open area is longer than or equal to the width of the electrode structure.

The first electrode portion may include a first electrode tab that is electrically connected to the first electrode and extends from one end of the electrode structure; and a first electrode lead that is welded and bonded to the first electrode tab and extends from one end of the first electrode tab. Furthermore, the second electrode may include a second electrode tab that is electrically connected to the second electrode and extends from the other end of the electrode structure; and a second electrode lead that is welded and bonded to the second electrode tab and extends from the other end of the second electrode tab.

Here, the first electrode lead may extend in one direction and penetrates one side of the first case, and the second electrode lead may extend in the other direction and penetrates the other side of the first case.

The first case may further include a first insulating member which is fixedly inserted into one side of the first case and has a through hole through which the first electrode lead airtightly passes; and a second insulating member which is fixedly inserted into the other side of the first case and has a through hole through which the second electrode lead passes airtightly.

The secondary battery may further include a venting door for discharging gas generated inside the battery case to the outside. Here, the venting door is provided in a specific area in the first case.

### [Advantageous Effects]

According to embodiments of the present disclosure, it is possible to manufacture lightweight secondary batteries with high structural stability.

### [Brief Description of the Drawings]

FIG. 1 is a perspective view of a secondary battery according to embodiments of the present invention.
Fig. 2 is a perspective view of an electrode structure according to embodiments of the present invention.
FIG. 3 is a perspective view of a battery case according to embodiments of the present invention.
FIG. 4 is a perspective view of a first case according to embodiments of the present invention.
FIG. 5 is a perspective view of a secondary battery including a battery case according to embodiments of the present invention.
FIG. 6 is a front view of a secondary battery (in a state in which a second case is not bonded) according to embodiments of the present invention.
FIG. 7 is a vertical cross-sectional view of the secondary battery shown in FIG. 6.
FIG. 8 is a front view of a secondary battery (in a state in which a second case is bonded) according to embodiments of the present invention.
FIG. 9 is a plan view of the secondary battery shown in FIG. 8.
FIG. 10 is a bottom view of the secondary battery shown in FIG. 8.

100: battery case
200: electrode structure
110: first case
111: insulation member
112: venting door
120: second case
310: electrode tab
320: electrode lead

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

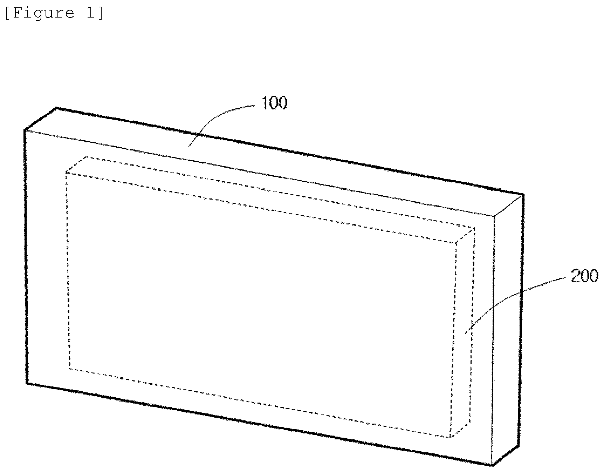

FIG. 1 is a perspective view of a secondary battery according to embodiments of the present invention.

A secondary battery according to embodiments of the present invention may be configured to include a battery case 100 and an electrode structure 200.

The electrode structure 200 may include a first electrode, a second electrode, and a separator. Here, the first electrode may correspond to a positive electrode and the second electrode may correspond to a negative electrode. Meanwhile, in the present invention, active materials of each of the first and second electrodes are not limited to specific chemicals.

In the present invention, the electrode structure 200 is not limited to a specific structure. For example, the electrode structure 200 may correspond to a stack type structure in which a first electrode, a second electrode, and a separator manufactured to have certain areas are sequentially stacked or to a wound structure in which a first electrode, a second electrode, and a separator manufactured to have certain areas are sequentially stacked and then wound.

The battery case 100 corresponds to a structure that accommodates the electrode structure 200 therein and is sealed.

The battery case 100 may have a rectangular parallelepiped shape. Here, the rectangular parallelepiped shape may mean a polyhedral structure including the front, back, left, right, top, and bottom, even if the corners of each face are rounded and thus not an exact rectangular parallelepiped shape.

An electrode terminal electrically connected to the electrode structure 200 may be provided on the outer surface of the battery case 100. Here, the electrode terminal may include a first electrode terminal connected to the first electrode, and a second electrode terminal connected to the second electrode.

An aqueous electrolyte solution may be injected into the battery case 100. Here, the battery case 100 may be formed with an injection port for injecting an aqueous electrolyte solution therein.

The battery case 100 may be provided with a venting door for discharging gas generated inside to the outside. Here, the venting door may refer to a structure that opens or breaks when the internal pressure exceeds a certain pressure and discharges internal gas.

A plurality of secondary batteries according to embodiments of the present invention may be sequentially stacked from front to back direction and included in a battery module.

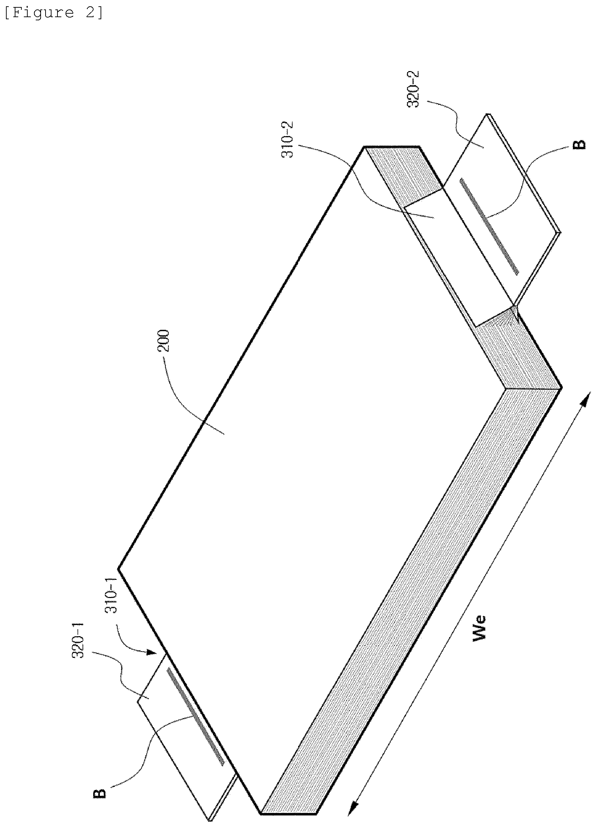

Fig. 2 is a perspective view of an electrode structure according to embodiments of the present invention.

The electrode structure 200 may have a stacked structure in which a first electrode, a second electrode, and a separator which are manufactured to have certain areas are sequentially stacked.

The electrode structure 200 may be connected to a first electrode portion and a second electrode portion formed on both sides, respectively, for electrical connection with an external device.

The first electrode portion may include a first electrode tab 310-1 and a first electrode lead 320-1. Here, the first electrode tabs 310-1 may be electrically connected to each of the first electrode layers and may extend from one end of the electrode structure 200. The first electrode lead 320-1 is welded and bonded to the first electrode tabs 310-1 and may extend from one end of the first electrode tabs 310-1.

The second electrode portion may include a second electrode tab 310-2 and a second electrode lead 320-2. Here, the second electrode tabs 310-2 may be electrically connected to each of the second electrode layers and may extend from the other end of the electrode structure 200. The second electrode lead 320-2 is welded and bonded to the second electrode tabs 310-2 and may extend from the other end of the second electrode tabs 310-2.

The first electrode tabs 310-1 and the first electrode lead 320-1 may be welded in a form of a straight line. In other words, as shown in FIG. 2, the bead shape B resulting from welding between the first electrode tabs 310-1 and the first electrode lead 320-1 may be a straight line of a certain length.

Additionally, the second electrode tabs 310-2 and the second electrode lead 320-2 may be welded in a form of a straight line. In other words, as shown in FIG. 2, the bead shape B resulting from welding between the second electrode tabs 310-2 and the second electrode lead 320-2 may be a straight line of a certain length.

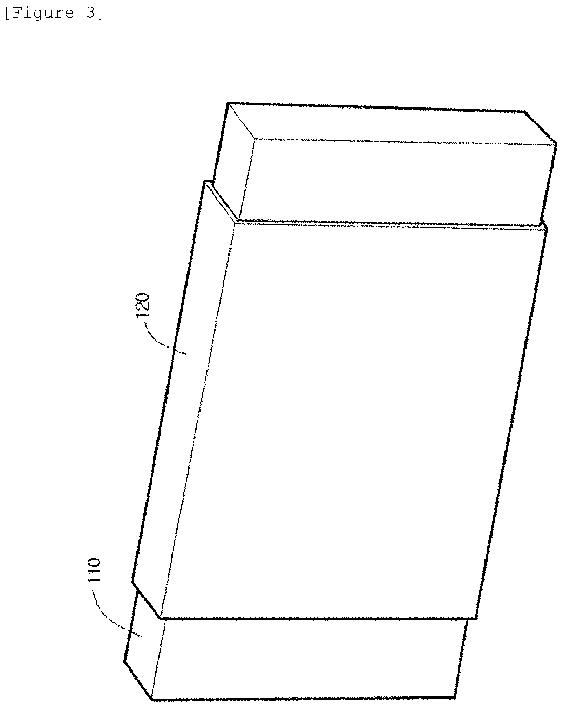

FIG. 3 is a perspective view of a battery case according to embodiments of the present invention.

Referring to FIG. 3, the battery case may include a first case 110 and a second case 120. Here, the first case 110 and the second case 120 may be sealed and joined so as to prevent the electrolyte contained therein from leaking.

The first case 110 and the second case 120 may be made of different materials. Here, the first case 110 may be made of an inflexible material and the second case 120 may be made of a flexible material.

For example, the first case 110 may be made of a hard metal (e.g., aluminum) and manufactured to maintain a specific shape. Furthermore, the second case 120 may be made of a laminated sheet in which a resin layer and a metal layer (e.g., an aluminum sheet) are laminated and bonded and thus, manufactured to allow a certain level of shape deformation.

The first case 110 may be a form having at least a portion of open area. For example, the first case 110 has a rectangular parallelepiped shape and an open area may be formed on one or more of the top, front, and back surfaces.

Here, the second case 120 may cover the open area of the first case 110 and be joined and sealed to the first case 110. For example, when some areas of the top and front of the first case 110 are open, the second case 120 covers the open area of the first case 110, and is bonded to be sealed to the first case 110.

The second case 120 may be heat-sealed and bonded to the first case 110 by heat and pressure applied to the overlapping portion with the first case 110. For example, the second case 120 may be manufactured to have an area larger than the open area of the first case 110 and cover the open area of the first case 110. Here, heat and pressure may be applied to the overlapping portion of the second case 120 and the first case 110, so that the first case 110 and the second case 120 can be joined to be sealed.

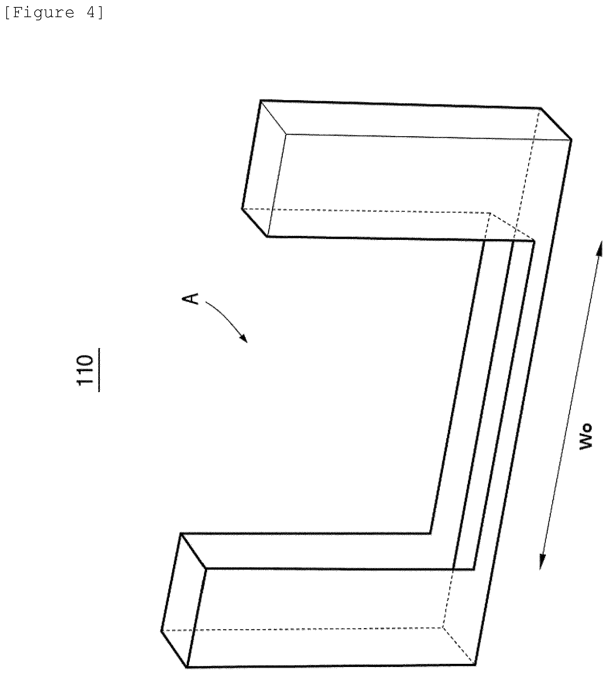

FIG. 4 is a perspective view of a first case according to embodiments of the present invention.

The first case 110 may be made of an inflexible material and may have at least a portion of open area. For example, the first case 110 may be manufactured in a form in which some areas of the top, front, and back surfaces are open, as shown in FIG. 4.

The first case 110 may have a shape that encloses (or has a shape that surrounds) the first electrode portion and the second electrode portion. More specifically, as shown in FIG. 4, the first case 110 may have a structure in which the central area A is open and space are formed inside both side areas. Accordingly, when the electrode structure 200 is accommodated inside the first case 110, the first case 110 surrounds the first electrode portion and the second electrode portion, thereby improving structural stability.

The open area A of the first case 110 may be formed so that the open width Wo is greater than or equal to the width We of the electrode structure 200. More specifically, when the width Wo of the open area A of the first case 110 is formed to be greater than or equal to the width We of the electrode structure 200, the first case 110 surrounds the first electrode portion and the second electrode portion whereas the outer surface of the electrode structure 200 is not completely surrounded, and the second case 120 covers the open area A and covers the outer surface of the electrode structure 200. Accordingly, when the secondary battery is stacked with other secondary batteries and manufactured as a module, the pressure from the first case of the adjacent secondary batteries is not applied to both ends of the electrode structure 200, thereby preventing pressure deviation of the electrode structure 200 from occurring.

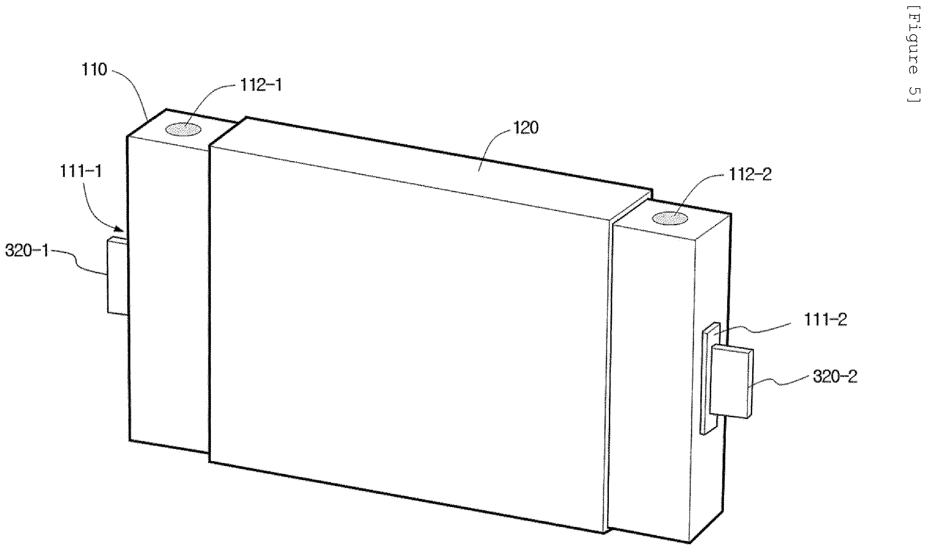

FIG. 5 is a perspective view of a secondary battery including a battery case according to embodiments of the present invention.

Referring to FIG. 5, the battery case may include a first case 110 and a second case 120.

The first case 110 may be made of an inflexible material and an open area may be formed on one or more of the top, front, and back surfaces of the first case 110. Here, the second case 120 may be made of a flexible material, cover the open area of the first case 110, and be sealed and joined to the first case 110.

The first electrode lead 320-1 may extend in one direction from one end of the first electrode tab 310-1 and penetrate one side of the first case 110. Here, the first case 110 may include a first insulating member 111-1 in which a through hole is formed through which the first electrode lead 320-1 passes airtightly. The first insulating member 111-1 may be made of an insulating material (for example, chemical-resistant plastic for insulating) and may be fixedly inserted into one side of the first case 100.

The second electrode lead 320-2 may extend from the other end of the second electrode tab 310-2 in the other direction and penetrate the other side of the first case 110. Here, the first case 110 may include a second insulating member 111-2 in which a through hole is formed through which the second electrode lead 320-2 passes airtightly. The second insulating member 111-2 may be formed of an insulating material (for example, chemical-resistant plastic for insulating) and may be fixedly inserted into the other side of the first case 100.

The battery case 100 may be provided with venting doors 112-1 and 112-2 for discharging gas generated inside to the outside. Here, the venting door may refer to a structure that opens or breaks when the internal pressure exceeds a certain pressure and discharges internal gas.

The venting door may be formed on one or more of the top, bottom, front, and back surfaces of the first case 110. For example, as shown in FIG. 5, the venting door may be provided at one end 112-1 of the upper surface of the first case 110, or the other end 112-2 of the upper surface of the first case 110.

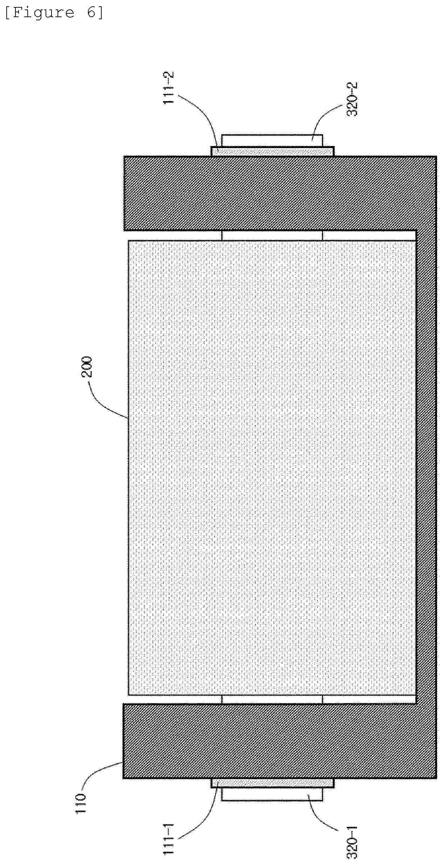

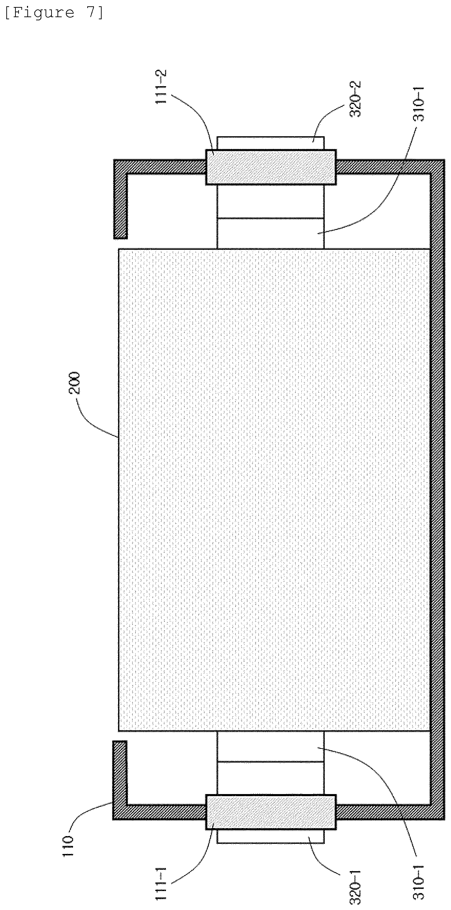

FIG. 6 is a front view of a secondary battery (in a state in which a second case is not bonded) according to embodiments of the present invention and FIG. 7 is a vertical cross-sectional view of the secondary battery shown in FIG. 6.

The first case 110 may be made of an inflexible material, and as shown in FIG. 6, it may be manufactured in a form in which some areas of the top, front, and back surfaces are open. Meanwhile, the first case 110 may be made of hard metal with a certain thickness, as shown in FIG. 7.

The first case 110 may have a shape that surrounds (or has a shape that encloses) the first electrode portion and the second electrode portion. More specifically, as shown in FIG. 7, the first case 110 has both ends formed in a "⊏" shaped structure, which surrounds the first electrode portion and the second electrode portion.

The width Wo of the open area A of the first case 110 is formed to be greater than or equal to the width We of the electrode structure 200, so that the first case 110 surrounds first electrode portion and the second electrode portion at both ends, but does not cover the front, back, and top surfaces of the electrode structure 200. Here, the area of the electrode structure 200 that is not covered by the first case 110 may be covered by the second case 120.

The first electrode lead 320-1 may extend in one direction from one end of the first electrode tab 310-1, airtightly penetrate the through hole of the first insulating member 111-1 which is fixedly inserted into one side of the first case 100, and be exposed to the outside of the first case 110.

The second electrode lead 320-2 may extend from the other end of the second electrode tab 310-2 in the other direction, airtightly penetrate the through hole of the second insulating member 111-2 which is fixedly inserted into the other side of the first case 100, and be exposed to the outside of the first case 110.

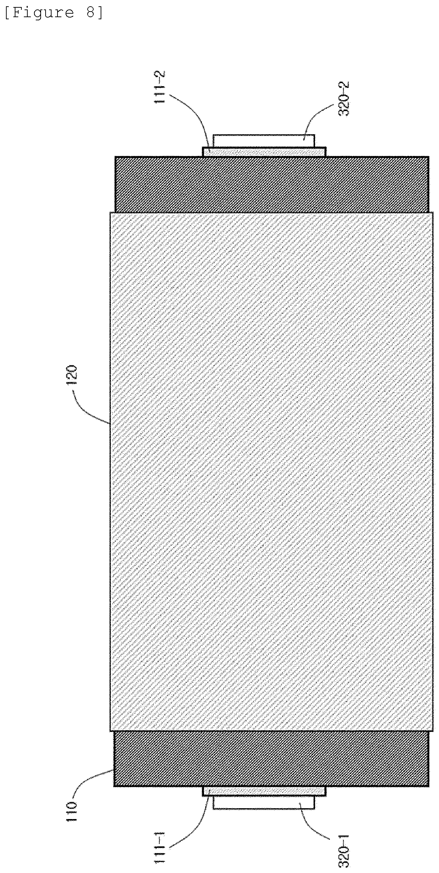

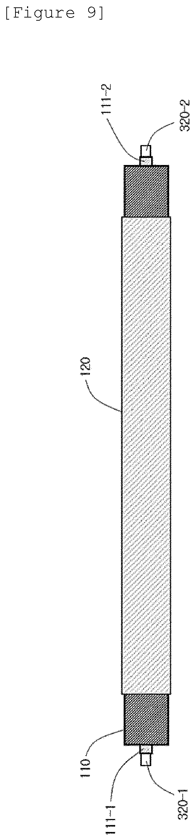

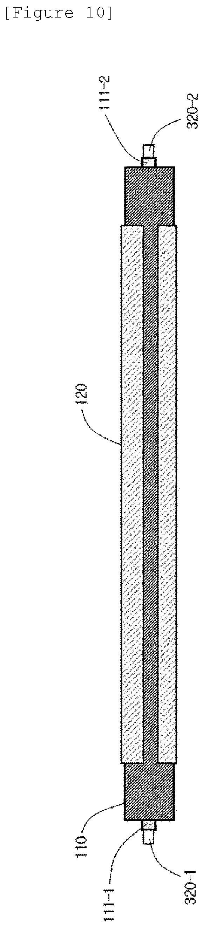

FIG. 8 is a front view of a secondary battery (in a state in which a second case is bonded) according to embodiments of the present invention, FIG. 9 is a plan view of the secondary battery shown in FIG. 8, and FIG. 10 is a bottom view of the secondary battery shown in FIG. 8.

The second case 120 may be made of a flexible material, cover the open area of the first case 110, and be joined to be sealed to the first case 110.

When the first case 110 is manufactured in a form in which some areas of the top, front, and back surfaces are open, as shown in FIG. 6, the second case 120 may cover all of the open areas of the first case 110 and joined to be sealed to the first case 110 as shown in FIGS. 8 to 10.

Meanwhile, FIG. 10 shows a structure in which the second case 120 covers a partial area of the bottom surface (lower surface) of the first case 110. However, unlike shown in FIG. 10, the second case 120 may enclose the entire bottom surface of the first case 110 as well and then joined to be sealed.

The secondary battery according to various embodiments of the present invention described above has a prismatic cell structure at both ends and a pouch-type cell structure at the center, thereby exhibiting high structural stability and enabling weight reduction.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A secondary battery comprising:
an electrode structure including a first electrode, a second electrode, and a separator; and
a battery case that accommodates the electrode structure therein and is sealed,
wherein the battery case includes a first case and a second case which are made of different materials.

2. The secondary battery of claim 1, wherein the first case is made of an inflexible material, and
wherein the second case is made of a flexible material.

3. The secondary battery of claim 2, wherein the first case is formed to surround a first electrode portion extending from one end of the electrode structure and a second electrode portion extending from the other end of the electrode structure.

4. The secondary battery of claim 3, wherein at least some areas in the first case are open, and
wherein the second case covers an open area of the first case and is bonded to be sealed to the first case.

5. The secondary battery of claim 4, wherein the second case is thermally bonded and sealed to the first case by heat and pressure applied to an overlapping area with the first case.

6. The secondary battery of claim 4, wherein the first case has a rectangular parallelepiped shape and has an open area formed on one or more of the top surface, the front surface, and the back surface.

7. The secondary battery of claim 6, wherein the open area is formed such that the width of the open area is longer than or equal to the width of the electrode structure.

8. The secondary battery of claim 3, wherein the first electrode portion includes:
a first electrode tab that is electrically connected to the first electrode and extends from one end of the electrode structure; and
a first electrode lead that is welded and bonded to the first electrode tab and extends from one end of the first electrode tab, and
wherein the second electrode includes:
a second electrode tab that is electrically connected to the second electrode and extends from the other end of the electrode structure; and
a second electrode lead that is welded and bonded to the second electrode tab and extends from the other end of the second electrode tab.

9. The secondary battery of claim 8, wherein the first electrode lead extends in one direction and penetrates one side of the first case, and
the second electrode lead extends in the other direction and penetrates the other side of the first case.

10. The secondary battery of claim 9, wherein the first case further includes:
a first insulating member which is fixedly inserted into one side of the first case and has a through hole through which the first electrode lead airtightly passes; and
a second insulating member which is fixedly inserted into the other side of the first case and has a through hole through which the second electrode lead passes airtightly.

11. The secondary battery of claim 3, further comprising a venting door for discharging gas generated inside the battery case to the outside,
wherein the venting door is provided in a specific area in the first case.
